Europäisches Patentamt

European Patent Office

Office européen des brevets

(19)

(11) Numéro de publication : **0 138 674**
**B1**

# (12) FASCICULE DE BREVET EUROPÉEN

(45) Date de publication du fascicule du brevet :
15.06.88

(51) Int. Cl.⁴ : **G 02 B   6/38**

(21) Numéro de dépôt : 84401872.1

(22) Date de dépôt : 21.09.84

(54) **Procédé pour réaliser une fiche de connecteur de fibre notamment optique et dispositif de mise en œuvre du procédé.**

(30) Priorité : 29.09.83 FR 8315482

(43) Date de publication de la demande :
24.04.85 Bulletin 85/17

(45) Mention de la délivrance du brevet :
15.06.88 Bulletin 88/24

(84) Etats contractants désignés :
BE DE GB IT NL

(56) Documents cités :
FR-A- 2 438 851
GB-A- 2 052 790
US-A- 4 333 705
PATENTS ABSTRACTS OF JAPAN, vol. 1, no. 152, 5
décembre 1977, page 7965 E 77

(73) Titulaire : SOURIAU ET CIE
9-13, rue du Général Galliéni
F-92103 Boulogne-Billancourt (FR)

(72) Inventeur : Obeissart, Albert
23, Grande rue Arsy
F-60190 Estrees St-Denis (FR)

(74) Mandataire : Chevallier, Robert Marie Georges
Cabinet BOETTCHER 23, rue La Boétie
F-75008 Paris (FR)

EP 0 138 674 B1

Jouve, 18, rue St-Denis, 75001 Paris, France

## Description

La présente invention concerne les procédés pour réaliser une fiche de connecteur de fibre, notamment de fibre optique ainsi que les dispositifs de mise en œuvre de ces procédés, ceux-ci étant plus particulièrement adaptés à la réalisation de fiches de connecteur pour fibre optique comportant à la périphérie une gaine de protection par exemple en matière plastique.

Les techniques modernes font de plus en plus appel aux fibres optiques pour transporter des informations d'un point à un autre. Cette technique tend à se substituer à celles des câbles électriques notamment du fait du gain de poids appréciable et de la quantité d'informations transmises.

Cependant, il est bien évident que pour relier deux points éloignés, il est nécessaire d'abouter une pluralité de tronçons de fibres optiques. Cet aboutement se fait, généralement au moyen de connecteurs qui permettent d'aligner les fibres optiques et ainsi, d'assurer une transmission des informations lumineuses, sans qu'il y ait une interruption dans la propagation, ou de pertes importantes.

Très schématiquement, ces connecteurs de fibre optique comportent deux fiches maintenues dans un même corps l'une en regard de l'autre, les extrémités se faisant parfaitement face afin que les faisceaux lumineux se propageant dans un tronçon puissent pénétrer dans le suivant sans subir une atténuation importante.

Comme déjà mentionné, cette technique prenant de plus en plus d'importance, il est nécessaire de manipuler ces fibres optiques sans qu'il y ait besoin de prendre de précautions particulières, et notamment dans ce cadre, pour les réparateurs, réaliser des embouts sur le terrain, sans que cela pose des problèmes délicats.

Aussi, la présente invention a pour but de mettre en œuvre un procédé pour réaliser de façon très facile et aisée une fiche de connecteur de fibre optique comportant une gaine, avec malgré tout, les précautions nécessaires pour éviter une rupture de la fibre optique. Plus précisément, la présente invention a pour objet un procédé pour réaliser une fiche de connecteur de fibre, notamment optique, caractérisé par le fait qu'il consiste :

— à introduire une extrémité d'une fibre dans une percée traversante réalisée dans un embout, percée dans laquelle la fibre peut se déplacer relativement librement,

— à positionner la face terminale de l'embout, avec la fibre dans ladite percée, contre une surface de référence,

— à appliquer une force élastique de maintien dudit embout contre ladite surface de référence,

— à former, avec une partie de ladite fibre émergente de l'autre extrémité dudit embout, opposée à la surface de référence, une portion de boucle substantiellement en forme d'oméga,

— à maintenir fixe l'extrémité de ladite portion de boucle la plus éloignée de celle située du côté de la sorite de la percée d'où émerge ladite fibre afin d'engendrer une force élastique due à l'élasticité naturelle du matériau de la fibre, qui applique et maintient la face terminale de la fibre contre la surface de référence,

— à solidariser, par tous moyens, au moins une partie dudit embout avec ladite fibre.

La présente invention a aussi pour objet un dispositif permettant de mettre en œuvre le procédé ci-dessus.

D'autres caractéristiques et avantages de la présente invention apparaîtront au cours de la description suivante, donnée en regard des figures annexées à titre illustratif, mais nullement limitatif dans lesquelles :

les figures 1 et 2 représentent, suivant deux vues perpendiculaires, un mode de réalisation d'un dispositif permettant de réaliser une fiche de connecteur de fibre optique,

la figure 3 représente un schéma permettant d'expliciter le fonctionnement du dispositif selon les figures 1 et 2 et la mise en œuvre du procédé selon l'invention, et

La figure 4 représente en coupe, un embout réalisé selon le procédé et au moyen du dispositif selon l'invention.

Le procédé, pour réaliser une fiche de connecteur de fibre optique comportant une gaine entourant un conduit réalisé en matériau transparent à la lumière à véhiculer, peut se mettre en œuvre de la façon suivante.

Tout d'abord, un embout enfichable est réalisé avec une percée traversante dont le diamètre est sur, au moins une partie, sensiblement égal au diamètre extérieur de la gaine de fibre optique. Eventuellement la percée de cet embout est terminée par une partie évasée qui pourra être, comme ultérieurement décrit, déformé afin d'obtenir un sertissage sur la gaine de la fibre optique. Pour cela, la fibre est introduite dans la percée de l'embout. Ensuite, l'embout est positionné, avec la fibre dans la percée, contre une surface de référence, comme par exemple, avantageusement, une sphère constituée par une bille en matériau inoxydable.

Après avoir positionné cet embout contre la surface de référence, on applique une force de maintien de cet embout contre cette surface de référence, par exemple au moyen d'un ressort produisant une force élastique de maintien. Cette force élastique est appliquée uniquement, sur l'embout afin de maintenir constamment contre la surface de référence, mais de n'imposer aucune contrainte sur la fibre, qui est donc relativement libre. Cependant, avant de solidariser définitivement l'embout avec la gaine de fibre optique, il est nécessaire de s'assurer que l'extrémité de la fibre optique est bien positionnée, notamment, par rapport à l'extrémité de la percée de l'embout, pour pouvoir, comme cela a été mentionné ci-avant, réaliser un connecteur de fibre optique, et assurer une parfaite continuité de la transmission des informations lumineuses.

Pour assurer cette position de l'extrémité de la fibre optique, il est nécessaire de lui appliquer à elle aussi, une force élastique. Cependant, étant donné malgré tout la relative fragilité des fibres optiques, il est nécessaire de prendre des précautions et de ne pas leur appliquer n'importe quel effort qui pourrait les briser ou endommager leurs extrémités qui forment le dioptre optique de sortie pour la transmission lumineuse.

En effet, toutes modifications du polissage de cet embout entraîneraient des atténuations dans la transmission des informations véhiculées par ces fibres optiques.

Aussi, pour exercer une pression sur la fibre optique afin de la maintenir contre cette surface de référence, on utilise une force due à l'élasticité du matériau de la fibre optique elle-même.

Pour cela, la partie émergente de cette fibre optique, est pincée par exemple à une certaine distance de l'orifice de sortie de la percée traversante dudit embout et on rapproche cette partie de l'embout, de façon à former, avec la fibre optique elle-même, une portion de boucle qui prend alors la forme d'un Ω. Cette boucle engendre une force élastique tendant à la ramener en ligne droite. Cependant comme l'extrémité de la boucle la plus éloignée de celle située du côté de la sortie de la percée d'où émerge la fibre optique est maintenue, la force élastique s'applique à l'autre extrémité et maintient de ce fait la fibre contre la surface de référence. Comme cette force est donnée uniquement par la fibre, on évite ainsi, toute détérioration.

Une fois que les deux forces élastiques qui maintiennent respectivement l'embout contre la surface de référence, et l'extrémité de la fibre contre des surfaces de référence, au moins une partie dudit embout est solidarisée par tous moyens avec la gaine de la fibre. Généralement, si la fibre comporte une gaine en matière plastique, cette solidarisation peut être obtenue par sertissage, ce qui est rapidement obtenu. Ce sertissage s'effectue couramment avec des pinces. Bien évidemment, cette solidarisation pourrait être de tout autre sorte, comme par exemple en utilisant des points de colle disposés dans l'entonnoir de l'embout par où pénètre ladite fibre. Le procédé décrit ci-dessus présente incontestablement des avantages car il permet de réaliser très facilement une fiche de connecteur pour fibre optique. Un des avantages du procédé est, du fait de sa simplicité, qu'il peut être mis en œuvre dans n'importe quel endroit et, comme disent les techniciens, directement sur le terrain. De plus il ne nécessite pas un appareillage compliqué et coûteux.

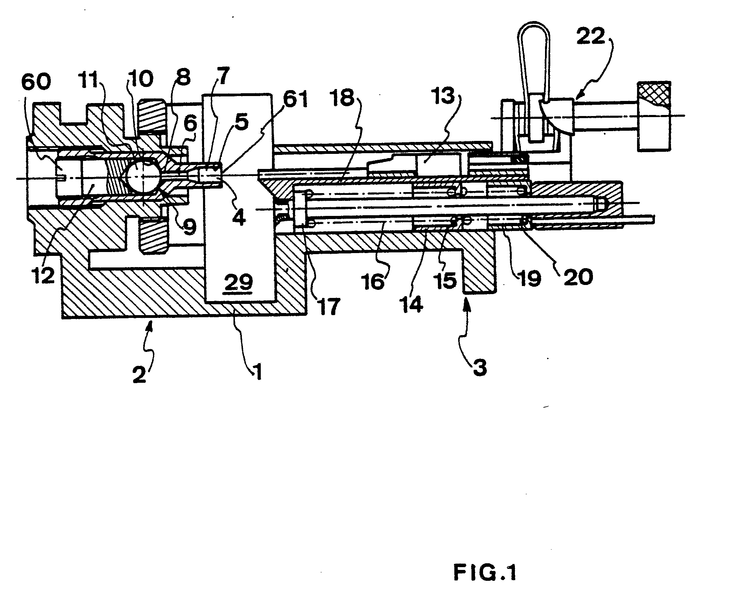

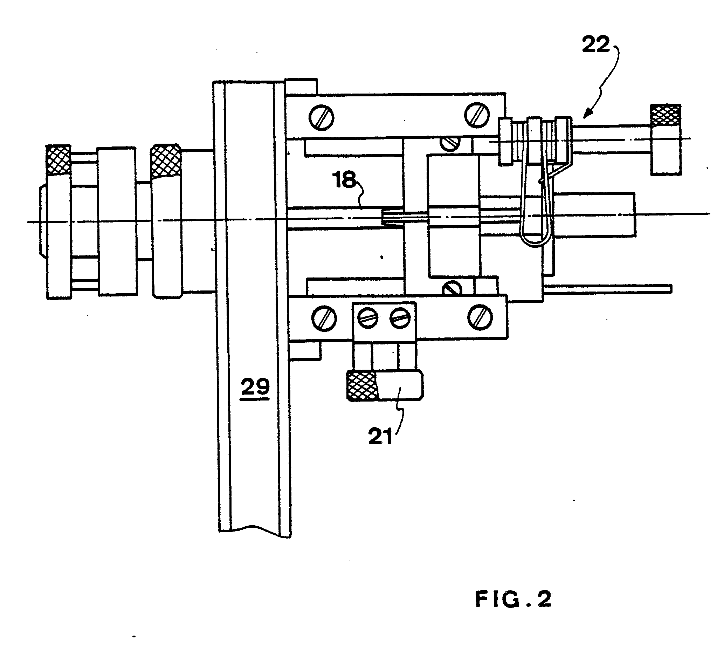

Le dispositif illustré sur les figures 1 et 2, montre un exemple de réalisation de cet appareillage. Il peut se présenter sous forme d'une pince qui peut être transportée très facilement et contenue dans n'importe quel outillage de réparateur ou de metteur au point, ayant à intervenir sur des transmissions d'informations par fibres optiques, notamment, pour pouvoir réaliser sur place une réparation, lors par exemple d'un endommagement d'un connecteur sur une ligne de transmission déjà installée.

Préalablement, il est nécessaire de préciser que les figures 1 et 2 représentent le même mode de réalisation du dispositif permettant de mettre en œuvre le procédé décrit ci-dessus, les mêmes références désignent les mêmes moyens, et de ce fait pour la description, il sera indifférent de se reporter à l'une ou l'autre des figures 1 et 2.

Le dispositif illustré sur les figures 1 et 2 comporte une embase 1, pouvant se décomposer essentiellement en deux parties fonctionnelles :

Une première partie dite porte-réceptacle d'embout 2 et une deuxième partie dite porte-chariot de guide de translation 3. La première partie comporte un réceptacle 4, conformé de façon à pouvoir recevoir un embout de fiche apte à être placé à l'extrémité d'une fibre optique, c'est-à-dire, que la surface intérieure 5 de ce réceptacle 4 a une forme complémentaire de cet embout. Ce réceptable, dans ce mode de réalisation, comprend une partie 6, relativement mince, et une partie 7, plus épaisse, correspondant à la tête de l'embout. L'extrémité 8 du réceptable 4 est fermée par une surface de référence 9, constituant une butée. Avantageusement, cette surface de référence de butée, est donnée par la surface extérieure 10 d'une bille 11 placée dans un logement 12. Cette bille peut être maintenue dans le fond de ce logement 12 par tous moyens et notamment par une vis 60. En regard et dans l'axe du réceptacle 4, est disposée la deuxième partie 3 de l'embase 1, c'est-à-dire la partie « porte-chariot » de guide translation.

Ce porte-chariot 3 maintient un support d'embout 13 monté sur une glissière, est solidaire d'une partie 14 apte à recevoir l'extrémité 15 d'un ressort 16 agissant en compression entre la partie de support de ressort 14 et une extrémité 17, solidaire de l'embase 1, l'action de ce ressort 16 agissant de façon à éloigner le chariot le plus possible de la sortie 61 du réceptacle 4. Ce support d'embout 13, est conformé et adapté à chaque type d'embout qu'il sera nécessaire de sertir sur une fibre optique. Il a donc une forme permettant de recevoir l'embout et de le maintenir. De plus, la position de ce support d'embout 13 est déterminé de façon, que lorsqu'il glisse, notamment sur la glissière 18, l'embout qu'il soutient puisse pénétrer à l'intérieur du réceptacle 4 pour venir parfaitement épouser la surface intérieure 5 de ce réceptacle 4 et de plus, de façon que son extrémité vienne buter contre la surface de référence 9, en l'occurrence, la surface extérieure 10 de la bille 11.

Le chariot support d'embout 13, comporte en plus une partie poussoir 19, solidaire de la partie 14, par l'intermédiaire d'un ressort 20 agissant entre ces deux parties 14 et 19. Cette partie poussoir 19 permet, en agissant de façon à la pousser le long de la glissière 18, d'amener le chariot support d'embout 13 vers l'entrée 14 du réceptacle 4. Dans cette phase opératoire, on obtient d'une part, dans une première étape, la compression du ressort 16 et dans une deuxième étape, la compression du ressort 20 qui permet ainsi de maintenir plaqué l'embout disposé dans le chariot support d'embout 13, contre la surface de référence 9 avec une force élastique de valeur donnée, cette valeur étant égale à la différence des compressions des deux ressorts 16 et 20.

Le dispositif comporte en outre, des moyens de blocage en position 21 (figure 2) de la partie 19, lorsque le support d'embout s'est déplacé le long de la glissière 18 et a permis d'appliquer l'embout contre la surface de référence.

Très schématiquement, ces moyens de blocage peuvent être constitués par un doigt venant se positionner juste derrière la partie 19, ce doigt étant manœuvrable en translation, pour pouvoir l'effacer quand il est nécessaire de faire revenir en arrière, le support d'embout 13, notamment sous l'action du ressort 16.

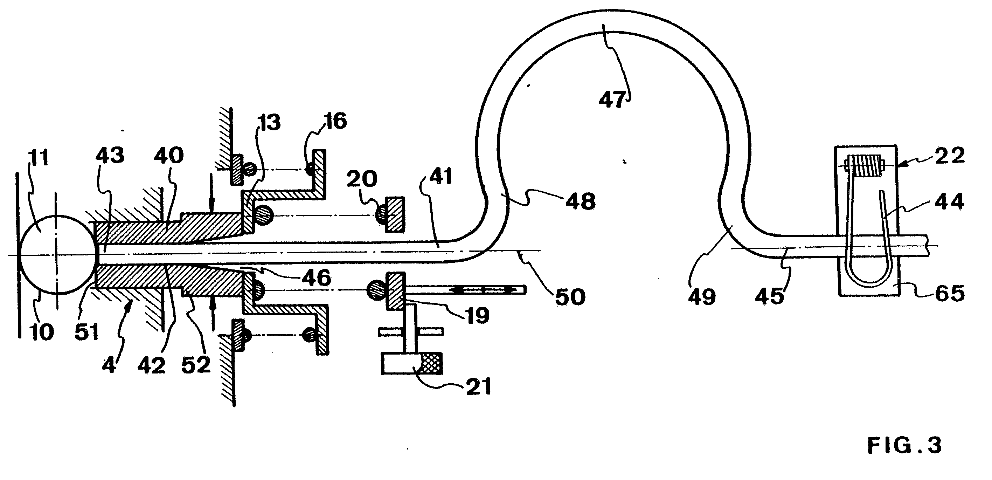

Avantageusement, sur la même glissière 18, le dispositif comporte un deuxième « chariot-pince » 22 qui peut se déplacer entre deux positions, d'une part une position (comme représenté sur la figure 1) la plus éloignée du réceptacle 4, et d'autre part une position rapprochée qui sera déterminée par l'homme de l'art, cette position rapprochée sur la glissière 18 du réceptacle 3, permettra d'obtenir la fonction qui sera explicitée, ci-après, notamment en regard de la figure 3.

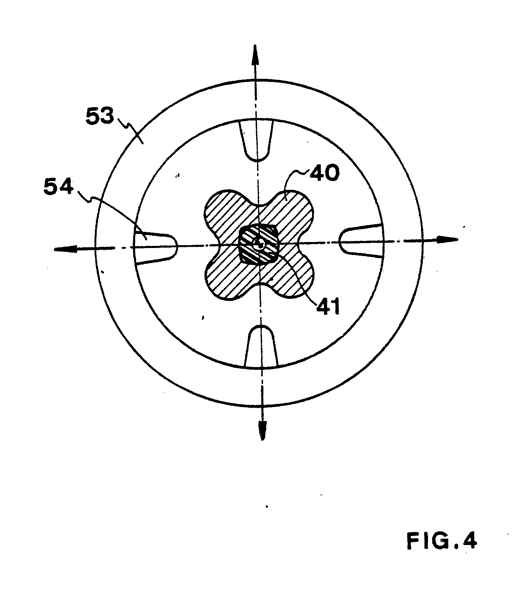

A ce dispositif, il peut être associé des moyens pour solidariser, comme il sera explicité ci-après, l'embout avec la fibre optique. Avantageusement, ces moyens peuvent être constitués par des moyens de sertissage disposés dans l'espace 29 compris entre les deux parties 2 et 3 définies ci-avant. Une pince de sertissage en elle-même bien connue, ne sera pas plus amplement décrite, et sera uniquement illustrée schématiquement sur les figures 3 et 4.

Le dispositif qui a été décrit en regard des figures 1 et 2, fonctionne de la façon suivante : son fonctionnement sera particulièrement explicité, notamment en regard de la figure 3, qui représente, de façon très schématique, l'ensemble des moyens essentiels mis en œuvre dans le dispositif décrit ci-dessus au regard des figures 1 et 2.

Ainsi, dans la première étape, un embout 40 est positionné dans le support-d'embout 13, quand ce dernier est le plus éloigné du réceptacle 4. Ensuite, une fibre optique 41 est introduite dans l'embout 40 qui comporte une percée traversante 42 dont le diamètre intérieur a un diamètre sensiblement égal au diamètre extérieur de la gaine de la fibre optique 41. Lorsque ces deux éléments sont disposés l'un dans l'autre, le support-d'embout 13 est déplacé pour comprimer, comme mentionné précédemment, les ressorts 16 et 20 et appliquer l'embout 40 contre la surface de référence 10 de la bille 11. L'embout 40 est maintenu plaqué contre cette surface de référence sous l'action du ressort comprimé 20, et il est maintenu dans cette position grâce à la partie 19 qui est bloquée en position par le doigt de blocage 21.

Dans ces condition, quelle que soit la position de la fibre 41 dans la percée traversante 42, son extrémité 43 est repoussée par la surface de référence 10, et ce d'autant plus que dans cette première phase d'opération, la fibre 41 n'est soumise à aucune contrainte. Elle se trouve donc, du fait de sa rigidité naturelle sensiblement alignée dans l'axe de la percée traversante 42.

Comme le deuxième chariot-pince 22 est situé sur cet axe, la fibre est alors maintenue par pincement sensiblement ponctuellement au moyen d'une pince ressort 44 entre celle-ci, et, avantageusement, un support 65 caoutchouté pour éviter de lui faire subir une endommagement quelconque. La fibre est alors alignée dans l'axe de la percée 42 et est maintenue par son autre extrémité émergente 45. Après cette opération, le chariot-pince 22 est rapproché d'une certaine quantité prédéterminée de la sortie 46 de l'embout pour que la partie de la fibre 41 qui se trouve entre la pince 22 et la sortie 36, forme une boucle 47 en forme de $(\Omega)$ comme représenté sur la figure. Les deux extrémités 48 et 49 de cette boucle 47 restent sensiblement situées sur l'axe 50 de la percée 42. Comme l'extrémité 49 de la boucle 47 est maintenue par la pince, les forces de réactions dues à l'élasticité naturelle du matériau de la fibre elle-même qui sont données par cette boucle à ses deux extrémités permet de maintenir plaquée, contre la surface de référence 10, l'extrémité de la fibre sensiblement dans le plan 51 d'extrémité de l'embout 40. Ainsi, la fibre est parfaitement maintenue et positionnée par rapport à l'embout.

Cette opération étant terminée, il est alors possible de procéder à la solidarisation de la surface extérieure de la gaine 41 à la tête 52 de l'embout 40, soit par exemple, par collage ou sertissage. Dans l'exemple illustré, un moyen de sertissage a été représenté par une partie de pince 53 comportant quatre mors 54 situés à 90° les uns des autres qui, sous l'action de force de compression, peuvent venir déformer la tête 52 de l'embout pour que celle-ci vienne s'écraser et/ou pénétrer sensiblement ponctuellement en quatre points sur ou dans la gaine extérieure de la fibre 41.

Ainsi l'embout 40 est parfaitement solidarisé avec la gaine extérieure de cette fibre, et, de ce fait, certifie que l'extrémité 43 de la fibre est parfaitement positionnée par rapport à l'embout, et plus particulièrement sa face de sortie. Il a été ainsi réalisé, très facilement, une fiche de connecteur pour fibres optiques qui pourra coopérer avec une fiche complémentaire afin d'assurer la transmission des informations lumineuses, comme mentionné précédemment. De ce qui a été décrit ci-dessus, il apparaît de toute évidence que le procédé et le dispositif qui permet de mettre en œuvre ce procédé, présentent les avantages qui ont été mentionnées précédemment.

**Revendications**

1. Procédé pour réaliser une fiche de connecteur de fibre, notamment optique, caractérisé par le fait qu'il consiste :

A introduire une extrémité d'une fibre dans une percée traversante dans un embout, percée dans laquelle la fibre peut se déplacer relativement librement,

A positionner la face terminale de l'embout, avec la fibre dans ladite percée, contre une surface de référence,

A appliquer une force élastique de maintien dudit embout contre ladite surface de référence,

A former, avec une partie de ladite fibre émergente de l'autre extrémité dudit embout, opposée à la surface de référence, une portion de boucle substantiellement en forme d'oméga,

A maintenir fixe l'extrémité de ladite portion de boucle la plus éloignée de celle située du côté de la sortie de la percée d'où émerge ladite fibre afin d'engendrer une force élastique due à l'élasticité naturelle du matériau de la fibre, qui applique et maintient la face terminale de la fibre contre la surface de référence,

A solidariser, par tous moyens, au moins une partie dudit embout avec ladite fibre.

2. Dispositif de mise en œuvre du procédé selon la revendication 1 caractérisé par le fait qu'il comporte :

Des moyens de porte-réceptacle (2) d'un réceptacle (4) apte à recevoir un embout (40), ledit réceptacle comprenant dans son intérieur à une extrémité, des moyens de surface formant une référence d'appui (9),

Des moyens porte-chariot à guide de translation (3) supportant un chariot support d'embout (13), apte à se déplacer sur un guide de translation (18) dudit porte-chariot (3) pour être déplacé vers ledit réceptacle afin d'insérer l'embout dans le réceptacle (4) ; et un chariot pince (22), apte à se déplacer entre deux positions prédéterminées, situées à deux distances différentes dudit réceptacle (4), ledit chariot pince étant destiné à maintenir la fibre afin de former la boucle en forme d'oméga ; et,

Des moyens commandables (19, 20) pour appliquer une force élastique sur ledit chariot support d'embout (13) pour maintenir l'embout contre ladite surface de référence.

3. Dispositif selon la revendication 2 caractérisé par le fait que lesdits moyens de surface de référence (9) sont constitués par la surface extérieure (10) d'une bille sphérique (11).

4. Dispositif selon l'une des revendications 1 à 3, cacactérisé par le fait que lesdits moyens de support réceptacle (2) et lesdits moyens porte-chariot à guide de translation (3) sont solidaires d'une embase (1).

5. Dispositif selon l'une des revendications 2 à 4, caractérisé par le fait qu'il comporte des moyens de sertissage situés dans un espace (29) disposé entre lesdits moyens de support-réceptacle (2) et lesdits moyens de porte-chariot à guide de translation (3).

6. Dispositif selon l'une des revendications 2 à 5, caractérisé par le fait qu'il comporte des moyens pour appliquer une foce de rappel audit chariot-support d'embout (13) tendant à éloigner ledit chariot-support d'embout, desdits moyens de porte-réceptacle (2).

**Claims**

1. A process for producing a fibre and in particular an optical fibre connector plug characterised in that it comprises :

Introducing an end of a fibre into a through passage provided in an end member, in which passage the fibre can move relatively freely,

Positioning the terminal face of the end member with the fibre in said passage against a reference surface,

Applying a resilient force for holding said end member against said reference surface,

Forming with a part of said fibre which emerges from the other end of said end member in opposite relationship to the reference surface, a loop portion substantially in the form of an omega,

Holding fast the end of said loop portion which is most remote from that which is towards the exit of the passage from which said fibre emerges in order to generate an elastic force due to the natural elasticity of the material of the fibre, which applies and holds the terminal face of the against the reference surface, and,

Securing by any means at least a part of said end member to said fibre.

2. Apparatus for carrying out the process according to claim 1 characterised in that it comprises :

Receptacle carrier means (2) for carrying a receptacle (4) capable of receiving an end member (40), said receptacle comprising in its interior at one end surface means forming a bearing reference (9),

Translatory guide carriage means (3) supporting an end member support carriage (13) capable of being displaced on a translatory guide (18) of said carriage carrier (3) to be displaced towards said receptacle in order to insert the end member into the receptacle (4) ; ans a pincher carriage (22) capable of being displaced between two predetermined positions disposed at two different distances from said receptacle (4), said pincher carriage being intended to hold the fibre in order to form the lopp in the form of an omega ; and

Controllable means (19, 20) for applying a resilient force to said end member support carriage (13) to hold the end member against said reference surface.

3. Apparatus according to claim 2 characterised in that said reference surface means (9) are formed by the outside surface (10) of a spherical ball (11).

4. Apparatus according to one of claims 1 to 3 characterised in that said receptacle support means (2) and said translatory guide carriage carrier means (3) are fixed with respect to a base (1).

5. Apparatus according to one of claims 2 to 4 characterised in that it comprises crimping means disposed in a space (29) between said receptacle support means (2) and said translatory guide carriage carrier means (3).

6. Apparatus according to one of claims 2 to 5 characterised in that it comprises means for applying a return force to said end member support carriage (13) tending to move said end member support carriage away from said receptacle carrier means (2).

## Patentansprüche

1. Verfahren zum Herstellen eines Verbindungssteckers für Fasern, insbesondere optische Fasern, gekennzeichnet durch folgende Verfahrensschritte :

Einführen eines Endes einer Faser in eine durchgehende Bohrung, die in einem Stopfen ausgebildet ist, wobei sich die Faser in der Bohrung relativ frei bewegen kann,

Positionieren der Abschlußfläche des Stopfens mit der Faser in der Bohrung an einer Referenzfläche,

Anwenden einer elastischen Haltekraft zum Festhalten des Stopfens an der Referenzfläche,

Bilden eines Schlingenabschnittes im wesentlichen in Form eines Omegas aus einem Teil der Faser, der aus dem der Referenzfläche entgegengesetzten anderen Ende des Stopfens austritt,

Festhalten des Endes des Schlingenabschnittes, das am weitesten von demjenigen Ende entfernt ist, das auf der Seite der Ausgangsöffnung der Bohrung liegt, aus der die Faser austritt, um aufgrund der natürlichen Elastizität des Fasermaterials eine elastische Kraft zu erzeugen, die die Abschlußfläche der Faser gegen die Referenzfläche andrückt und dort festhält,

Verbinden von mindestens einem Teil des Stopfens mit der Faser auf beliebige Weise.

2. Vorrichtung zur Durchführung eines Verfahrens nach Anspruch 1, gekennzeichnet durch :

Einen Aufnahmeträger (2) für eine Aufnahme (4), die zum Aufnehmen eines Stopfens (40) geeignet ist, wobei die Aufnahme an einem Ende ihres Innenbereiches eine Fläche aufweist, die einen Referenzanschlag (9) bildet,

Einen Schlittenträger (3) mit einer Translationsführung, der einen Stopfenträgerschlitten (13) trägt, der auf der Translationsführung (18) des Schlittenträgers (3) verschiebbar ist für eine Bewegung in Richtung auf die Aufnahme, um den Stopfen in die Aufnahme (4) einzuführen und einen Klemmschlitten (22), der zwischen zwei vorbestimmten, einen unterschiedlichen Abstand von der Aufnahme (4) aufweisenden Positionen verstellbar ist, wobei der Klemmschlitten zum Festhalten der Faser zwecks Bildung der omegaförmigen Schleife bestimmt ist, und

Antriebsmittel (19, 20), um eine elastische Kraft auf den Stopfenträgerschlitten (13) auszuüben und damit den Stopfen gegen die Referenzfläche zu halten.

3. Vorrichtung nach Anspruch 2, dadurch gekennzeichnet, daß die Referenzfläche (9) aus der äußeren Oberfläche einer sphärischen Kugel gebildet ist.

4. Vorrichtung nach einem der Ansprüche 1 bis 3, dadurch gekennzeichnet, daß der Aufnahmeträger (2) und der Schlittenträger (3) mit Translationsführung mit einer Grundplatte (1) verbunden sind.

5. Vorrichtung nach einem der Ansprüche 2 bis 4, dadurch gekennzeichnet, daß Spannmittel vorgesehen sind, die in einem Zwischenraum (29) zwischen dem Aufnahmeträger (2) und dem Schlittenträger (3) mit Translationsführung angeordnet sind.

6. Vorrichtung nach einem der Ansprüche 2 bis 5, dadurch gekennzeichnet, daß sie Mittel zum Ausüben einer Rückstellekraft auf den Stopfenträgerschlitten (13) umfaßt, welche versuchen, den Stopfenträgerschlitten von dem Aufnahmeträger (2) zu entfernen.

FIG.1

FIG. 2

FIG.3

0 138 674

FIG.4